# EUROPEAN PATENT APPLICATION

(11) **EP 4 841 775 A2**
(43) Date of publication of application: **18.11.2026**
(21) Application number: 26185105.9
(22) Date of filing: 01.08.2024
(51) Int. Cl.: H01M 50/249

(54) **BATTERY PACK AND VEHICLE INCLUDING SAME**

(30) Priority: 03.08.2023 KR 20230101821
(62) Document number(s) of the earlier application(s) in accordance with Art. 76 EPC: 24849638.2 / 4 654 364
(71) Applicant: LG Energy Solution, Ltd., Seoul 07335 (KR)
(72) Inventor: JUNG, Min-Yong, 34122 Daejeon (KR); CHOI, Bum, 34122 Daejeon (KR); KIM, In-Hyeok, 34122 Daejeon (KR); CHUNG, Jae-Heon, 34122 Daejeon (KR)
(74) Representative: Goddar, Heinz J.

(57) **Abstract**

Disclosed are a battery pack and a vehicle including the same. The battery pack includes a battery module in which a plurality of battery cells are accommodated and a venting portion is formed; and a pack case in which the battery module is accommodated, and a flame discharge channel may be formed adjacent to the venting portion of the battery module between the battery module and the pack case.

## Description

### TECHNICAL FIELD

The present application claims priority to Korean Patent Application No. 10-2023-0101821 filed on August 3, 2023 in the Republic of Korea, the disclosures of which are incorporated herein by reference.

The present disclosure relates to a battery pack and a vehicle including the same, and more specifically, to a battery pack capable of preventing propagation of flame or gas, and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries may include a battery module having a case for protecting battery cells, where a plurality of battery cells are stacked and inserted to the case, and a battery pack in which a plurality of battery modules are accommodated.

If a thermal event occurs in any battery cell provided in the battery module and a flame occurs in at least one of the battery cells, the flame may spread to other battery cells in which a flame is not generated.

If a flame generated from a certain battery cell spreads to other neighboring battery cells in this way, not only the battery cells, but also the battery module or battery pack may be damaged, burned out, or explode due to a chain reaction of flames, so there is a problem that the stability of the battery module or battery pack cannot be secured. Also, since gas is also generated from the battery cells inside the battery module, various problems may occur if such gas moves or is discharged in an undesirable direction.

Alternatively, if flame generated from a battery cell leaks out of the case of the battery module, the flame may spread to other battery modules where the flame is not generated, and also a dangerous situation may also occur for users. For example, in a state where a battery module or battery pack is installed in an electric vehicle, if a flame occurs in the battery cell and the flame leaks out, the driver driving the electric vehicle may be burned or face a dangerous situation.

### DISCLOSURE

### Technical Problem

Therefore, the present disclosure is directed to providing a battery pack that may prevent flame or gas from spreading to other neighboring battery cells by discharging the flame or gas in a preset direction when the flame or gas is generated in any battery cell inside a battery module, and a vehicle including the same.

In addition, the present disclosure is directed to providing a battery pack that may prevent flame or gas from spreading to neighboring battery modules by discharging the flame or gas in a preset direction when the flame or gas is generated in any battery cell inside a battery module, and a vehicle including the same.

In addition, the present disclosure is directed to providing a battery pack that may ensure the stability of the battery module or battery pack by reducing the possibility of a thermal event through cooling of the battery cells, and a vehicle including the same.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery pack, comprising: a battery module in which a plurality of battery cells are accommodated and a venting portion is formed; and a pack case in which the battery module is accommodated, wherein a flame discharge channel is formed adjacent to the venting portion of the battery module between the battery module and the pack case.

In an embodiment, the venting portion may be formed at a lower side of the battery module.

In an embodiment, the battery module may include a lower frame, a protrusion may be formed on the lower frame, and the flame discharge channel may be provided as a flame discharge space formed between the battery module and the pack case by the protrusion.

In an embodiment, the protrusion may include a pair of first protrusions formed on both edges of the lower frame; a second protrusion formed parallel to the pair of first protrusions between the pair of first protrusions; and a third protrusion formed to intersect the second protrusion.

In an embodiment, the battery cell may be a cylindrical battery cell, a seating portion with a circular section may be formed on the lower frame so that the cylindrical battery cell is seated thereon, and the venting portion may be formed in the seating portion.

In an embodiment, the seating portion may include a side lower support configured to support a lower side of a side surface of the cylindrical battery cell; and a bottom support configured to support a bottom surface of the cylindrical battery cell, and the venting portion that ruptures at a temperature or pressure of a preset range may be formed in the bottom support.

In an embodiment, the bottom support may rupture when a thermal event occurs in the cylindrical battery cell so that a temperature or pressure exceeds a preset level, and flame generated during the thermal event may move to the flame discharge space through the ruptured bottom support and be discharged.

In an embodiment, a cooling fluid may be accommodated inside the battery module, and the seating portion may have a waterproof adhesive to prevent leakage of the cooling fluid.

In an embodiment, a cooling fluid may be accommodated inside the battery module, and the plurality of battery cells may be configured to be impregnated with the cooling fluid.

In an embodiment, the cooling fluid may include a cooling water or an insulating oil.

In an embodiment, the battery module may include a middle frame and a lower frame, and the cooling fluid may be accommodated between the middle frame and the lower frame and be in direct contact with the plurality of battery cells.

In an embodiment, a waterproof adhesive may be provided at an upper side of the middle frame to prevent leakage of the cooling fluid.

In an embodiment, the waterproof adhesive may be an epoxy-based waterproof resin.

In an embodiment, the waterproof resin may be made of a flame retardant material.

In an embodiment, the waterproof resin may be made of a phase change material (PCM) and provided to cool the plurality of battery cells.

In another aspect of the present disclosure, there is also provided a vehicle, comprising the battery pack described above.

### ADVANTAGEOUS EFFECTS

The embodiments of the present disclosure have the effect of preventing flame or gas from spreading to other neighboring battery cells by discharging the flame or gas in a preset direction when the flame or gas is generated in any battery cell inside a battery module.

In addition, there is an effect of preventing flame or gas from spreading to neighboring battery modules by discharging the flame or gas in a preset direction when the flame or gas is generated in any battery cell inside a battery module.

In addition, there is an effect of ensuring the stability of the battery module or battery pack by reducing the possibility of a thermal event through cooling of the battery cells.

In addition, the safety of a driver driving an electric vehicle may be improved through lower venting.

However, the effects that can be derived through the present disclosure are not limited to the effects described above, and other technical effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a battery pack according to an embodiment of the present disclosure.
FIG. 2 is an assembled perspective view showing a battery module provided in the battery pack according to an embodiment of the present disclosure.
FIG. 3 is an exploded perspective view showing the battery module provided in the battery pack according to an embodiment of the present disclosure.
FIG. 4 is a side view showing the battery module of FIG. 2 so that a protrusion is visible.
FIG. 5 is a bottom view of FIG. 2 showing the protrusion formed on a lower frame.
FIG. 6 is a cross-sectional view showing the battery module coupled with a lower case in the battery pack according to an embodiment of the present disclosure, in a schematic way for convenience of explanation.
FIG. 7 is a diagram showing that a flame moves as a bottom support of the lower frame is ruptured in FIG. 6.
FIG. 8 is an enlarged view showing part A of FIG. 3.
FIG. 9 is a diagram showing that the bottom support of any one of the lower frames of the battery module is ruptured in FIG. 8.
FIG. 10 is a drawing for illustrating a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

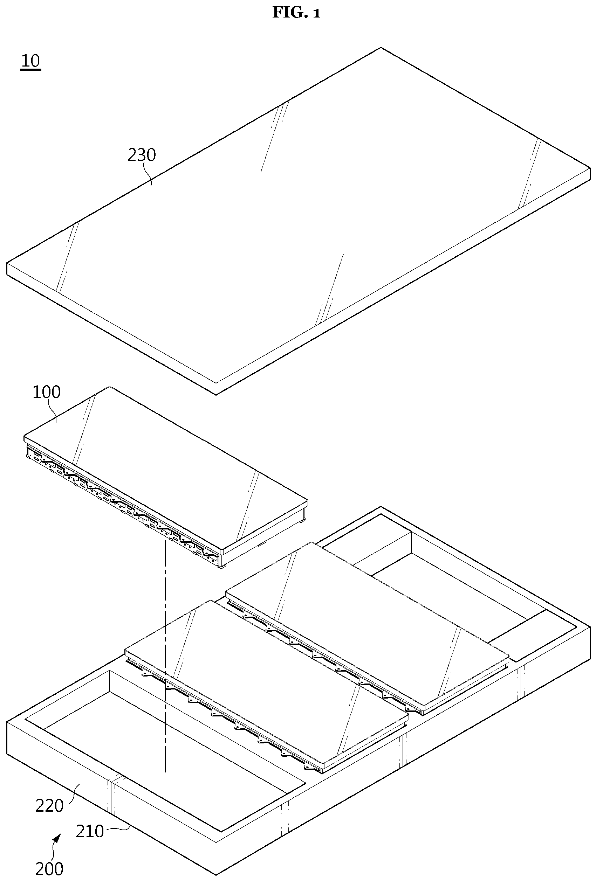

FIG. 1 is a diagram schematically showing a battery pack according to an embodiment of the present disclosure.

Referring to FIG. 1, the battery pack 10 according to an embodiment of the present disclosure may include a battery module 100 and a pack case 200.

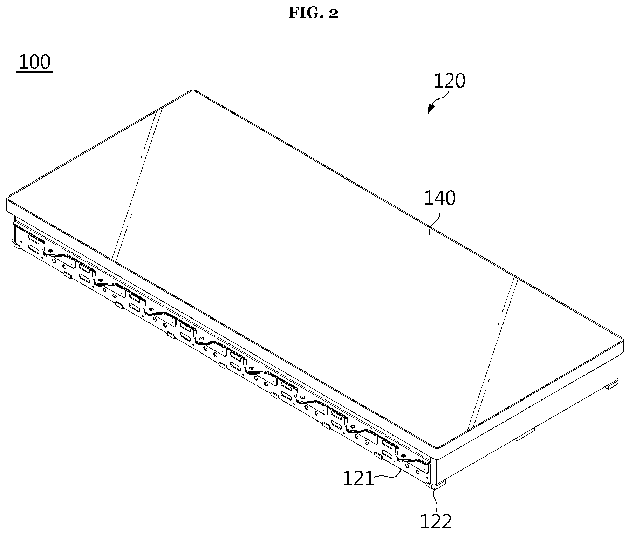

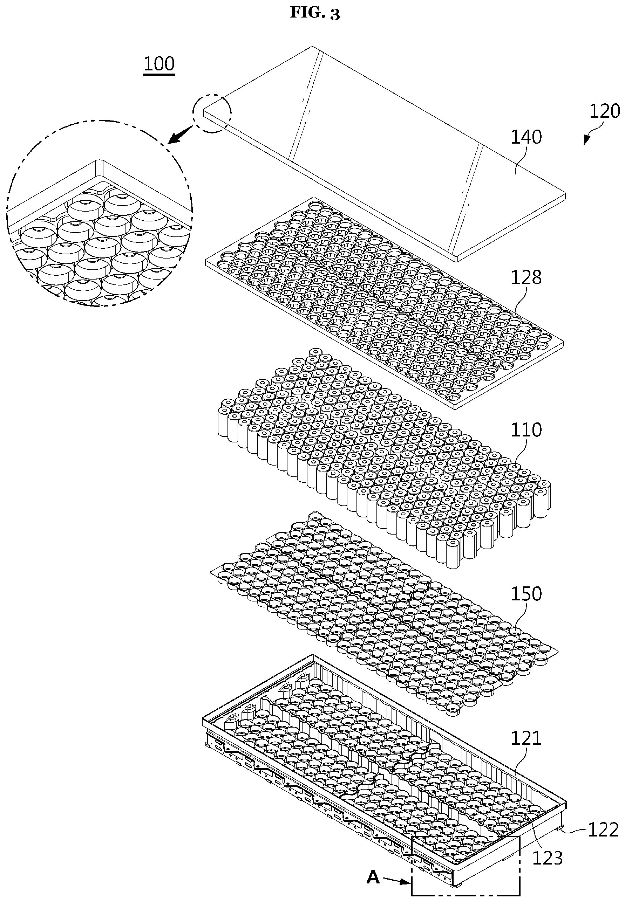

FIG. 2 is an assembled perspective view showing a battery module provided in the battery pack according to an embodiment of the present disclosure, and FIG. 3 is an exploded perspective view showing the battery module provided in the battery pack according to an embodiment of the present disclosure.

Referring to FIGS. 2 and 3, the battery module 100 may include a plurality of battery cells 110 and a module frame 120. The enlarged view of FIG. 3 shows the bottom of a waterproof adhesive 140.

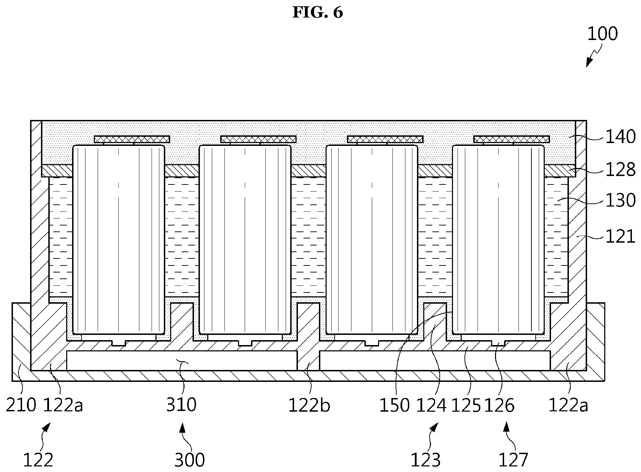

The plurality of battery cells 110 are accommodated in the module frame 120 of the battery module 100, and a venting portion 127 (see FIG. 6), explained later, is formed in the module frame 120. Here, one or more battery modules 100 may be provided. When a plurality of battery modules 100 are provided, they may be arranged in various ways. For example, as shown in FIG. 1, the battery modules 100 may be arranged horizontally. Alternatively, the battery modules 100 may be arranged horizontally and vertically, but is not limited thereto.

Here, the battery module 100 may include various types of battery cells 110. For example, the battery module 100 may include pouch-type battery cells 110, prismatic battery cells 110, or cylindrical battery cells 110. However, for convenience of explanation, the case where the battery cell 110 is cylindrical as shown in FIG. 3 will be described for convenience of explanation.

The cylindrical battery cell 110 may include an electrode assembly, a battery can, a positive electrode current collection plate, a cell terminal, and a negative electrode current collection plate.

The electrode assembly has a structure in which a positive electrode plate, a negative electrode plate, and a separator interposed between the positive electrode plate and the negative electrode plate are wound in one direction, and is formed as a jelly-roll type with a center hole. For example, the electrode assembly may be manufactured by winding a stack formed by sequentially stacking a negative electrode plate, a separator, a positive electrode plate, and a separator at least once. Also, the center hole of the electrode assembly is also used for welding the cell terminal to a positive electrode current collection plate. In other words, the cell terminal and the positive electrode current collection plate may be welded by irradiating a laser through the center hole of the electrode assembly. The positive electrode plate and the negative electrode plate may be formed in a sheet shape. A positive electrode active material is applied on one side or both sides of the positive electrode plate, and a first uncoated portion in which no positive electrode active material is applied may exist at an end of the positive electrode plate. A negative electrode active material is applied on one side or both sides of the negative electrode plate, and a second uncoated portion in which no negative electrode active material is applied may exist at an end of the negative electrode plate. That is, at least one of the positive electrode plate and the negative electrode plate may include an uncoated portion not coated with an active material at the long side end in the winding direction, respectively. The uncoated portion is exposed to the outside of the separator, while forming a plurality of winding turns based on the center of the electrode assembly, and may be used as an electrode tab in itself. Here, the first uncoated portion and the second uncoated portion may be configured to face opposite directions. However, an uncoated portion may not be formed in the electrode assembly. Also, the positive electrode active material coated on the positive electrode plate and the negative electrode active material coated on the negative electrode plate may use active materials known in the art without limitation. The separator may use porous polymer films, for example porous polymer films made of polyolefin polymers such as ethylene homopolymer, propylene homopolymer, ethylene/butene copolymer, ethylene/hexene copolymer, and ethylene/methacrylate copolymer, alone or by stacking them. As another example, the separator may be made of a typical porous non-woven fabric, for example a non-woven fabric made of high melting point glass fiber, polyethylene terephthalate fiber, etc. At least one surface of the separator may include a coating layer of inorganic particles. In addition, it is also possible that the separator itself is made of a coating layer of inorganic particles. Particles constituting the coating layer may have a structure coupled with a binder such that an interstitial volume exists between adjacent particles.

The electrode assembly is accommodated in the battery can, and a through hole may be formed therein. For example, the battery can may be formed in a cylindrical shape so that the electrode assembly is accommodated inside the battery can, and the battery can may be electrically connected to the negative electrode plate of the electrode assembly. Accordingly, the battery may may have the same polarity as the negative electrode plate, namely negative polarity.

The positive electrode current collection plate is electrically connected to the positive electrode plate, for example at the top of the electrode assembly. For example, the positive electrode current collection plate is made of a conductive metal material and may be electrically connected to the first uncoated portion of the positive electrode plate.

The cell terminal is made of a conductive metal material and is electrically connected to the positive electrode current collection plate through the through hole of the battery can. Also, the cell terminal is electrically connected to the positive electrode plate of the electrode assembly through the positive electrode current collection plate, thereby having positive polarity.

The negative electrode current collection plate is electrically connected to the negative electrode plate, for example at the bottom of the electrode assembly. For example, the negative electrode current collection plate is made of a conductive metal material such as aluminum, steel, copper, or nickel, and may be electrically connected to the second uncoated portion of the negative electrode plate.

Referring to FIG. 3, the plurality of battery cells 110 are accommodated in the module frame 120. Also, a venting portion 127 is formed in the module frame 120. The venting portion 127 may be formed at various locations. For example, the venting portion 127 may be formed at the lower side of the battery module 100 (see FIG. 6), but is not limited thereto. The venting portion 127 will be described later in detail.

Referring to FIG. 3, the module frame 120 may include a lower frame 121 and a middle frame 128.

The lower frame 121 is coupled to the middle frame 128 at the lower side of the middle frame 128. Also, the lower side of the cylindrical battery cell 110 is seated on the lower frame 121. That is, the lower portion of each of plurality of cylindrical battery cells 110 may be inserted into the lower frame 121 and supported. Also, as will be described in detail later, a cooling fluid 130 may be accommodated between the middle frame 128 and the lower frame 121.

The middle frame 128 supports a portion of the cylindrical battery cell 110. The middle frame 128 supports the upper side of the position rather than a location supported by the lower frame 121 in the cylindrical battery cell 110. Here, the plurality of cylindrical battery cells 110 may be inserted into and supported by the middle frame 128, respectively. Also, the middle frame 128 may be coupled with the lower frame 121. As will be described in detail later, a waterproof adhesive 140 may be provided on the upper side of the middle frame 128.

Referring to FIG. 1, at least one battery module 100 is accommodated in the pack case 200. The pack case 200 may include, for example, a lower case 210, a side case 220, and an upper case 230. The lower case 210 is configured so that at least one battery module 100 is seated thereon. The lower case 210 may be formed in a square plate shape, but is not limited thereto. The lower case 210 forms the bottom of the pack case 200. The side case 220 may be configured to extend upward from the edge of the lower case 210. The side case 220 defines the height of the pack case 200 and forms a preset space between the side case 220 and the lower case 210. Also, at least one battery module 100 is seated in the space between the side case 220 and the lower case 210. The side case 220 may include a long-side side frame that is relatively long and a short-side side frame that is relatively short. Alternatively, the side case 220 may include side frames with the same length. Also, the upper case 230 is coupled with the side case 220.

The flame discharge channel 300 is formed adjacent to the venting portion 127 of the battery module 100 between the battery module 100 and the pack case 200. Hereinafter, the flame discharge channel 300 will be described in detail.

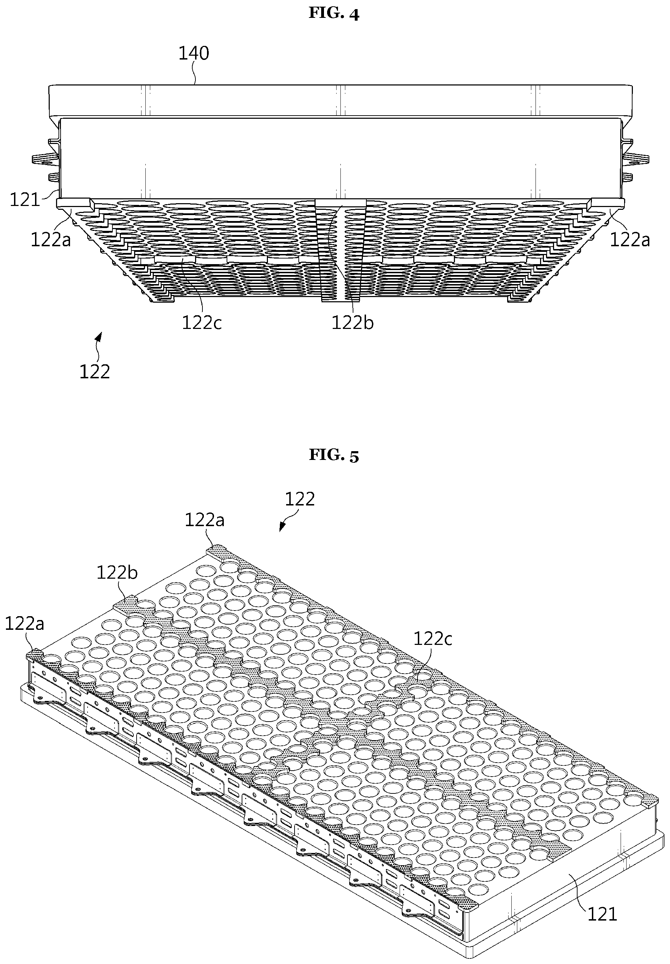

FIG. 4 is a side view showing the battery module of FIG. 2 so that a protrusion is visible, and FIG. 5 is a bottom view of FIG. 2 showing the protrusion formed on a lower frame.

Referring to FIGS. 4 and 5, a protrusion 122 is formed on the lower frame 121 of the module frame 120. Here, the protrusion 122 may be formed in various ways. For example, the protrusion 122 may include a first protrusion 122a, a second protrusion 122b, and a third protrusion 122c. The first protrusion 122a may be provided as a pair, and the pair of first protrusions 122a are formed on both edges of the lower frame 121. Also, the second protrusion 122b is formed parallel to the pair of first protrusions 122a between the pair of first protrusions 122a. Here, the second protrusion 122b may be formed at the exact center between the pair of first protrusions 122a, but is not limited thereto, and may be formed at various positions between the pair of first protrusions 122a. Also, the second protrusion 122b may be formed parallel to the pair of first protrusions 122a, but is not limited thereto. The third protrusion 122c is formed to intersect the second protrusion 122b. Here, the third protrusion 122c may be formed to pass through the exact center of the second protrusion 122b, but is not limited thereto, and may be formed to pass through various positions of the second protrusion 122b. Also, the third protrusion 122c may be formed to be perpendicular to the second protrusion 122b, but is not limited thereto.

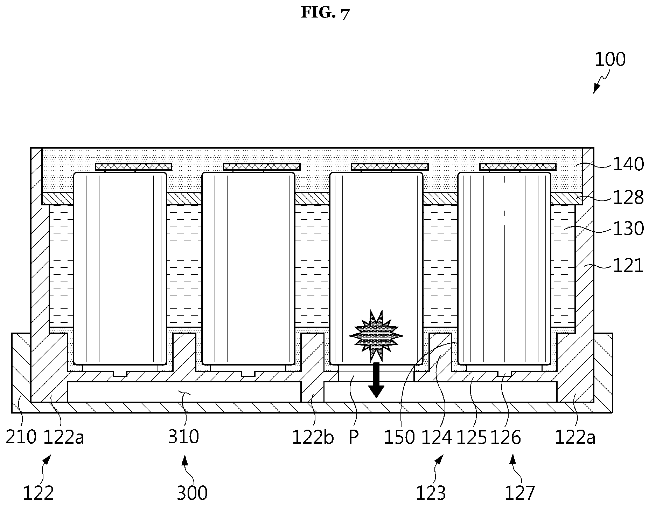

FIG. 6 is a cross-sectional view showing the battery module coupled with a lower case in the battery pack according to an embodiment of the present disclosure, in a schematic way for convenience of explanation, and FIG. 7 is a diagram showing that a flame moves as a bottom support of the lower frame is ruptured in FIG. 6.

Referring to FIGS. 6 and 7, in the case where the protrusion 122 is formed on the lower frame 121, when the lower frame 121 is accommodated in the lower case 210 of the pack case 200, the protrusion 122 of the lower frame 121 comes into contact with the lower case 210, so a space of a preset range is formed between one protrusion 122 and a neighboring protrusion 122.

For example, a space of a preset range is formed between the first protrusion 122a and the second protrusion 122b, and flame may be discharged through the space formed in this way between the lower frame 121 of the battery module 100 and the lower case 210 of the pack case 200 by the protrusions122a, 122b, 122c. Gas generated from the battery cell 110 may also be discharged through the above space like a flame. Hereinafter, even if no special mention is made about the emission of gas, it should be understood that gas is discharged in the same way as a flame. That is, the space formed between the lower frame 121 of the battery module 100 and the lower case 210 of the pack case 200 by the protrusions 122a, 122b, 122c is a flame discharge space 310 where the flame is discharged. Here, the flame discharge channel 300 according to an embodiment of the present disclosure may be provided as the flame discharge space 310 described above.

As described above, the venting portion 127 may be formed on the lower side of the battery module 100. Also, referring to FIGS. 6 and 7, in the case where the venting portion 127 is formed on the lower side of the battery module 100, when a thermal event occurs in the battery cell 110, flame is discharged toward the lower side of the battery module 100. If the flame is discharged toward the lower side of the battery module 100 in this way, the flame moves in a direction opposite to the driver driving the electric vehicle, thereby improving the safety of the driver.

Here, the venting portion 127 may be formed at the lower side of the battery module 100 to discharge the flame toward the lower side of the battery module 100, and flame discharge channel 300 provided as the flame discharge space 310 to discharge the flame moving toward the lower side of the battery module 100 through the venting portion 127 may be formed between the lower frame 121 and the lower case 210. That is, as shown in FIG. 7, when a thermal event occurs in the battery cell 110, the venting portion 127 ruptures (see P in FIG. 7) and the flame moves to the flame discharge channel 300 between the lower frame 121 and the lower case 210 through the venting portion 127, and then the flame is discharged to the outside through a venting path provided in the pack case 200.

As a result, when flame or gas is generated in any battery cell 110 inside the battery module 100, the flame or gas may be discharged in a preset direction to prevent the flame or gas from spreading to other neighboring battery cells 110. Also, if a flame or gas is generated in any battery cell 110 inside the battery module 100, the flame or gas may be discharged in a preset direction to prevent the flame or gas from spreading to neighboring battery modules 100.

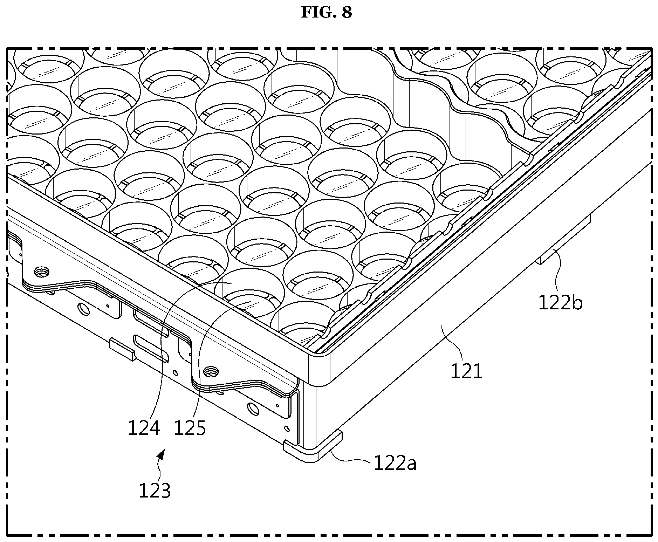

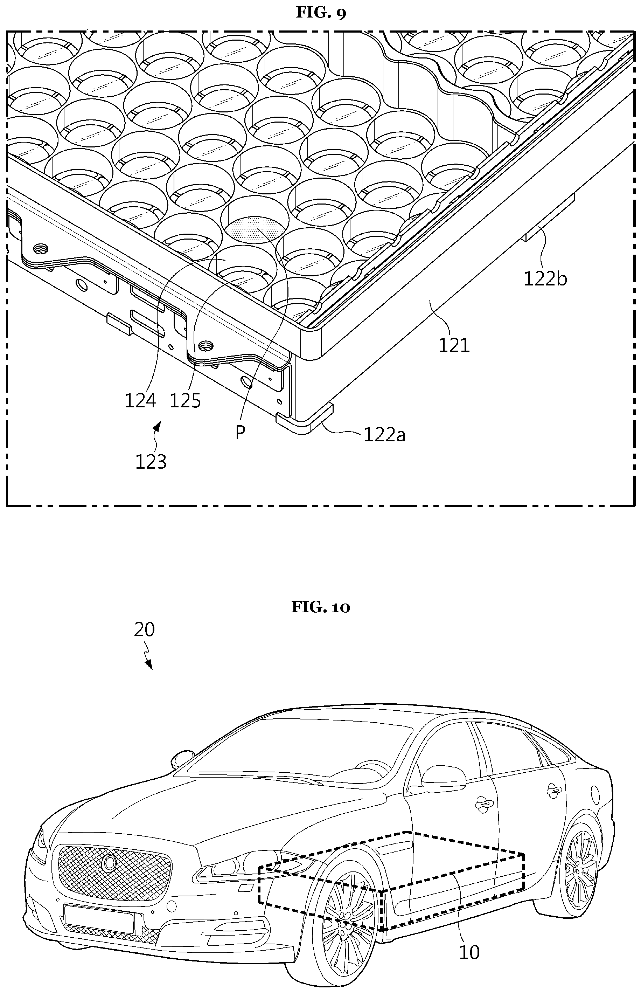

FIG. 8 is an enlarged view showing part A of FIG. 3, and FIG. 9 is a diagram showing that the bottom support of any one of the lower frames of the battery module is ruptured in FIG. 8.

Hereinafter, the venting portion 127 will be described in detail.

Referring to FIGS. 6 and 8, a seating portion 123 on which the cylindrical battery cell 110 is seated may be formed in the lower frame 121 of the module frame 120. Here, the seating portion 123 may have a circular section so that the cylindrical battery cell 110 is seated thereon, but is not limited thereto. For example, the seating portion 123 may be provided in a polygonal shape larger than the diameter of the cylindrical battery cell 110.

Here, the seating portion 123 may include a side lower support 124 and a bottom support 125. The side lower support 124 supports the lower side of the side surface of the cylindrical battery cell 110. Also, the bottom support 125 supports the bottom surface of the cylindrical battery cell 110. That is, when the cylindrical battery cell 110 is inserted into the seating portion 123, the lower side of the side surface and the bottom surface of the cylindrical battery cell 110 may be supported by the seating portion 123. Here, the venting portion 127 that ruptures at a temperature or pressure of a preset range may be formed on the bottom support 125 of the seating portion 123. The bottom support 125 may rupture in various ways. The bottom support 125, which supports the battery cell 110 where a thermal event occurred, may be torn entirely or partially due to pressure. Alternatively, the bottom support 125 may be melted and removed entirely or partially by heat.

For this purpose, the bottom support 125 may be made of a material that melts at a preset temperature. Alternatively, the bottom support 125 may be made of a material that tears or ruptures at a preset pressure. For example, as shown in FIG. 6, a rupture groove 126 may be formed in the bottom support 125 so that the bottom support 125 may be easily removed. In this case, the venting portion 127 may be formed by the rupture groove 126.

However, the present disclosure is not limited thereto, and for example, one side of the bottom support 125 may be formed thin so as to be easily torn.

In addition, referring to FIGS. 7 and 9, when a thermal event occurs in the cylindrical battery cell 110 so that the temperature or pressure exceeds a preset level, the bottom support 125 may rupture (see P in FIGS. 7 and 9), and the flame or gas generated during the thermal event may move to the flame discharge space 310 through the ruptured bottom support 125 from the cylindrical battery cell 110 and be discharged.

Meanwhile, referring to FIGS. 6 and 7, a cooling fluid 130 may be accommodated inside the battery module 100. The cooling fluid 130 is to cool the plurality of battery cells 110, and the plurality of battery cells 110 may be impregnated in the cooling fluid 130. For example, the cooling fluid 130 may be accommodated between the middle frame 128 and the lower frame 121 of the module frame 120.

In addition, the plurality of battery cells 110 are inserted into the middle frame 128 and seated on the lower frame 121 and impregnated with the cooling fluid 130, whereby the cooling fluid 130 may be directly contacted to the plurality of battery cells 110. In other words, the cooling fluid 130 comes into direct contact with the plurality of battery cells 110 and directly cools the plurality of battery cells 110, so cooling efficiency may be improved. Here, the cooling fluid 130 may include a cooling water or an insulating oil, but is not limited thereto.

If the cooling fluid 130 is accommodated between the middle frame 128 and the lower frame 121, leakage of the cooling fluid 130 may be a problem. Referring to FIG. 6, a waterproof adhesive 140 may be provided at the upper side of the middle frame 128 to prevent leakage of the cooling fluid 130. Also, although not shown in FIG. 6, if the waterproof adhesive 140 potted at the upper side of the middle frame 128 is molded, the upper case 230 of the pack case 200 may be configured to cover the upper side of the waterproof adhesive 140. Here, potting refers to a method of dropping the waterproof adhesive 140 on the upper side of the middle frame 128 and hardening the waterproof adhesive 140 to be packaged.

Also, the seating portion 123 may also have a waterproof adhesive 150 to prevent leakage of the cooling fluid 130. In FIG. 3, the waterproof adhesives 140, 150 are shown as having a fixed shape, but this merely shows the waterproof adhesives 140, 150 to correspond to the cylindrical battery cell 110 for convenience of explanation.

Here, the waterproof adhesives 140, 150 may be of various types. For example, the waterproof adhesives 140, 150 may be epoxy-based waterproof resins, for example, hybrid resins.

As a modified embodiment, the waterproof resin may be made of various flame retardant materials. If the waterproof resin is prepared as a flame retardant material in this way, when one cylindrical battery cell 110 ignites, the flame is blocked by the waterproof resin made of the flame retardant material and cannot move, thereby preventing the flame from spreading to other neighboring cylindrical battery cells 110. However, the waterproof resin may not be applied to the venting portion 127, which must be ruptured by flame or gas.

In another modified embodiment, the waterproof resin may include a phase change material (PCM) to cool the plurality of battery cells 110.

The phase change material is a material that absorbs and stores heat internally when it changes from a solid to a liquid, and then releases the stored heat when it changes from a liquid to a solid. When heat is generated from the cylindrical battery cell 110 during a thermal event, the waterproof resin made of the phase change material may absorb the heat generated from the cylindrical battery cell 110 and change into a liquid to cool the cylindrical battery cell 110. Accordingly, the waterproof resin may have all the effects of waterproofing, preventing the spread of flame, and cooling the cylindrical battery cell 110.

However, not only the waterproof adhesives 140, 150 are used to prevent leakage of the cooling fluid 130, and various types of sealing members may also be used.

FIG. 10 is a drawing for illustrating a vehicle including the battery pack according to an embodiment of the present disclosure.

Referring to FIG. 10, a vehicle 20 according to an embodiment of the present disclosure may include the battery pack 10 described above. That is, the battery pack 10 according to an embodiment of the present disclosure may be applied to the vehicle 20, for example, a predetermined vehicle designed to use electricity, such as an electric vehicle or a hybrid electric vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Meanwhile, the terms indicating directions as used herein such as upper, lower, left, right, front, and rear are used for convenience of description only, and it is obvious to those skilled in the art that the term may change depending on the position of the stated element or an observer.

### INDUSTRIAL APPLICABILITY

The present disclosure relates to a battery pack and a vehicle including the same, and, particularly, is available to industries related to secondary batteries.

In view of the foregoing disclosure, the present invention may be implemented in accordance with the following itemized embodiment examples.
Item 1. A battery pack, comprising:
   a battery module in which a plurality of battery cells are accommodated and a venting portion is formed; and
   a pack case in which the battery module is accommodated,
   wherein a flame discharge channel is formed adjacent to the venting portion of the battery module between the battery module and the pack case.
Item 2. The battery pack according to item 1,
   wherein the venting portion is formed at a lower side of the battery module.
Item. 3 The battery pack according to item 1,
   wherein the battery module includes a lower frame, and a protrusion is formed on the lower frame, and
   wherein the flame discharge channel is provided as a flame discharge space formed between the battery module and the pack case by the protrusion.
Item. 4 The battery pack according to item 3,
   wherein the protrusion includes:
   a pair of first protrusions formed on both edges of the lower frame;
   a second protrusion formed parallel to the pair of first protrusions between the pair
   of first protrusions; and
   a third protrusion formed to intersect the second protrusion.
Item. 5 The battery pack according to item 3,
   wherein the battery cell is a cylindrical battery cell,
   wherein a seating portion with a circular section is formed on the lower frame so that the cylindrical battery cell is seated thereon, and
   wherein the venting portion is formed in the seating portion.
Item. 6 The battery pack according to item 5,
   wherein the seating portion includes:
   a side lower support configured to support a lower side of a side surface of the cylindrical battery cell; and
   a bottom support configured to support a bottom surface of the cylindrical battery cell,
   wherein the venting portion that ruptures at a temperature or pressure of a preset range is formed in the bottom support.
Item. 7 The battery pack according to item 6,
   wherein the bottom support ruptures when a thermal event occurs in the cylindrical battery cell so that a temperature or pressure exceeds a preset level, and wherein flame generated during the thermal event moves to the flame discharge space through the ruptured bottom support and is discharged.
Item. 8 The battery pack according to item 6,
   wherein a cooling fluid is accommodated inside the battery module, and
   wherein the seating portion has a waterproof adhesive to prevent leakage of the cooling fluid.
Item. 9 The battery pack according to item 1,
   wherein a cooling fluid is accommodated inside the battery module, and the plurality of battery cells are configured to be impregnated with the cooling fluid.
Item. 10 The battery pack according to item 9,
   wherein the cooling fluid includes a cooling water or an insulating oil.
Item. 11 The battery pack according to item 9,
   wherein the battery module includes a middle frame and a lower frame, and the cooling fluid is accommodated between the middle frame and the lower frame and is in direct contact with the plurality of battery cells.
Item. 12 The battery pack according to item 11,
   wherein a waterproof adhesive is provided at an upper side of the middle frame to prevent leakage of the cooling fluid.
Item. 13 The battery pack according to item 12,
   wherein the waterproof adhesive is an epoxy-based waterproof resin.
Item. 14 The battery pack according to item 13,
   wherein the waterproof resin is made of a flame retardant material.
Item. 15 The battery pack according to item 13,
   wherein the waterproof resin is made of a phase change material (PCM) and provided to cool the plurality of battery cells.
Item. 16 A vehicle, comprising the battery pack according to any one of items 1 to 15.

## Claims

1. A battery pack, comprising:
a plurality of battery cells;
a frame on which the plurality of battery cells are seated;
a venting portion formed to close bottom surfaces of the plurality of battery cells and configured to be at least partially opened by gas or heat; and
a pack case in which the plurality of battery cells and the frame are accommodated,
wherein protrusions extending downward are formed on the frame,
wherein a lower end of the pack case is brought into contact with the protrusions of the frame so that a flame discharge space is formed between one protrusion and an adjacent protrusion, and
wherein when a thermal event occurs in the battery cells, at least a part of the venting portion is opened so that flame moves to the flame discharge space through the venting portion.

2. The battery pack according to claim 1,
wherein the venting portion is formed at a lower side of the frame.

3. The battery pack according to claim 1,
wherein the frame includes a lower frame, and the protrusions are formed on the lower frame.

4. The battery pack according to claim 3,
wherein the protrusions include:
a pair of first protrusions formed on both edges of the lower frame;
a second protrusion formed parallel to the pair of first protrusions between the pair of first protrusions; and
a third protrusion formed to intersect the second protrusion.

5. The battery pack according to claim 3,
wherein the battery cell is a cylindrical battery cell,
wherein a seating portion with a circular section is formed on the lower frame so that the cylindrical battery cell is seated thereon, and
wherein the venting portion is formed in the seating portion.

6. The battery pack according to claim 5,
wherein the seating portion includes:
a side lower support configured to support a lower side of a side surface of the cylindrical battery cell; and
a bottom support configured to support a bottom surface of the cylindrical battery cell,
wherein the venting portion that ruptures at a temperature or pressure of a preset range is formed in the bottom support.

7. The battery pack according to claim 6,
wherein the bottom support ruptures when a thermal event occurs in the cylindrical battery cell so that a temperature or pressure exceeds a preset level, and
wherein flame generated during the thermal event moves to the flame discharge space through the ruptured bottom support and is discharged.

8. The battery pack according to claim 6,
wherein a cooling fluid is accommodated inside the frame, and
wherein the seating portion has a waterproof adhesive to prevent leakage of the cooling fluid.

9. The battery pack according to claim 1,
wherein a cooling fluid is accommodated inside the frame, and the plurality of battery cells are configured to be impregnated with the cooling fluid.

10. The battery pack according to claim 9,
wherein the cooling fluid includes a cooling water or an insulating oil.

11. The battery pack according to claim 9,
wherein the frame includes a middle frame and a lower frame, and the cooling fluid is accommodated between the middle frame and the lower frame and is in direct contact with the plurality of battery cells.

12. The battery pack according to claim 11,
wherein a waterproof adhesive is provided at an upper side of the middle frame to prevent leakage of the cooling fluid.

13. The battery pack according to claim 12,
wherein the waterproof adhesive is an epoxy-based waterproof resin made of a flame retardant material.

14. The battery pack according to claim 13,
wherein the waterproof resin is made of a phase change material (PCM) and provided to cool the plurality of battery cells.

15. A vehicle, comprising the battery pack according to any one of claims 1 to 14.
